# EUROPÄISCHE PATENTSCHRIFT

(11) **EP 2 149 784 B1**
(45) Veröffentlichungstag und Bekanntmachung des Hinweises auf die Patenterteilung: **04.04.2012**
(21) Anmeldenummer: 08013718.5
(22) Anmeldetag: 31.07.2008
(51) Int. Cl.: G01D 5/20, H05K 1/18, H05K 1/16

(54) **Magnetisches Wegsensorsystem**
Magnetic path sensor system
Système de capteur de trajectoire magnétique

(43) Veröffentlichungstag der Anmeldung: 03.02.2010
(73) Patentinhaber: Kuhnke Automotive GmbH & Co. KG, 23714 Bad Malente (DE)
(72) Erfinder: Behrens, Dirk, 24211 Preetz (DE); Münchow, Stefan, 24222 Schwentinental (DE)
(74) Vertreter: Hemmer, Arnd

(56) Entgegenhaltungen:
- EP-A- 0 880 035
- EP-A- 0 936 443
- EP-A- 1 283 663
- DE-A1- 2 202 519
- DE-A1- 2 415 232
- DE-A1- 10 220 982
- DE-A1- 10 354 694
- DE-A1- 19 805 621
- DE-A1-102004 004 100
- DE-A1-102004 016 622
- DE-A1-102004 052 909
- US-A- 3 480 854
- US-A- 4 380 928
- US-A1- 2006 001 422

## Beschreibung

Die Erfindung betrifft ein magnetisches Wegsensorsystem.

Derartige Sensorsysteme sind beispielsweise aus EP 0 238 922 B1, EP 0 693 673 B1, EP 0 693 674 B1, EP 1 048 932 A1 sowie DE 10 2005 035 799 A1 bekannt. Die dort beschriebenen Sensorsysteme sind zur berührungslosen, absoluten Wegerfassung durch Wandungen hindurch geeignet. So kann mit ihnen zum Beispiel die Bewegung eines in einem Gehäuse befindlichen Bauteils mittels eines außerhalb des Gehäuses angeordneten Sensors erfasst werden. Hierzu ist an dem beweglichen Bauteil ein Permanentmagnet befestigt. Der in diesen Sensorsystemen verwendete Sensor weist einen langgestreckten, stabförmigen Kern aus einem weichmagnetischen Material auf, um den drei Spulen gewickelt sind. Die mittlere Spule ist mindestens so lang wie der Messweg, über den die Bewegung des Bauteils erfasst werden soll. Diese Spule bildet die Primärspule einer Messtransformatoranordnung, deren Sekundärspulen von den übrigen um den Kern gewickelten Spulen gebildet werden. Die Primärspule wird mit einer Wechselspannung beaufschlagt, wodurch in den beiden Sekundärspulen eine Spannung induziert wird. Der Permanentmagnet erzeugt mit seinem Magnetfeld einen virtuellen Luftspalt im Kern des Sensors, wodurch das Feld der Primärspule differenziell in zwei Einzelfelder aufgeteilt wird. Je nach Position des Permanentmagneten entlang der Länge des Kerns ändert sich das Teilungsverhältnis des Felds der Primärspule, was zur Änderung der Induktionsspannungen in den Sekundärspulen führt. Hieraus kann ein Positionssignal ermittelt werden, welches repräsentativ für die Position des Permanentmagneten relativ zur Länge des Kerns ist.

Aus DE 10 2004 016 622 A1 ist eine Positionssensoranordnung bekannt, bei der ein Permanentmagnet entlang eines weichmagnetischen Kerns, auf dem eine Primärspule und zwei Sekundärspulen angeordnet sind, bewegbar ist. Bei dem Kern handelt es sich um einen rechteckigen Rahmen aus einem weichmagnetischen Material. Sowohl die Primärspule als auch die beiden Sekundärspulen sind auf einem gemeinsamen Längsabschnitt des rahmenförmigen Kerns angeordnet.

Die Aufgabe der Erfindung ist es, ein magnetisches Wegsensorsystem zu schaffen, das zur berührungslosen Positionsbestimmung eines Bauteils durch eine Wand geeignet ist, wobei es gegenüber den bekannten Sensoreinrichtungen dieser Art verbesserte magnetische Eigenschaften und damit einhergehend eine verbesserte Messgenauigkeit und Störfestigkeit aufweist.

Gelöst wird diese Aufgabe durch ein magnetisches Wegsensorsystem mit den im Anspruch 1 angegebenen Merkmalen. Bevorzugte Weiterbildungen dieses Wegsensorsystems ergeben sich aus den Unteransprüchen, der nachfolgenden Beschreibung sowie den Zeichnungen.

Das erfindungsgemäße magnetische Wegsensorsystem weist zumindest einen Magneten, vorzugsweise einen Permanentmagneten, und zumindest einen Sensor auf. Der Magnet und der Sensor sind relativ zueinander beweglich angeordnet. Bevorzugt ist der Magnet bewegbar und der Sensor feststehend angeordnet. D.h., über den Sensor kann eine Positionsänderung des Magneten erfasst werden. Der Sensor weist einen weichmagnetischen Kern auf, der eine innere Freifläche umschließt. Hierzu weist der Kern zwei zueinander parallel ausgerichtete lineare Kernabschnitte auf, die an ihren axialen Enden jeweils mit einem sich quer oder bogenförmig anschließenden Kernabschnitten verbunden sind.

Auf dem Kern sind zwei Primärspulen und zwei Sekundärspulen angeordnet. Beide Primärspulen bilden die Messstrecke des Sensors und werden mit einer Wechselspannung beaufschlagt. In diesem Zusammenhang ist unter einer Wechselspannung jede sich zeitlich ändernde Spannung zu verstehen, der Begriff Wechselspannung ist also im Sinne der Erfindung nicht auf eine sich sinusförmig ändernde Spannung beschränkt. Zusammen bilden die Primärspulen und die Sekundärspulen einen Messtransformator.

Erfindungsgemäß ist der Magnet außerhalb der von dem Kern aufgespannten Fläche, insbesondere außerhalb der von dem Kern umschlossenen Freifläche, angeordnet und zur Erzeugung einer magnetischen Sättigung in dem Kern ausgebildet, wobei der Magnet parallel zu dem Kernabschnitt bewegbar ist, auf dem eine Primärspule angeordnet ist. Dementsprechend verliert der die Primärspule tragende Kernabschnitt durch die von dem Magneten verursachte Sättigung auf Höhe der Position des Magneten seine magnetische Leitfähigkeit. Insofern weist der Kern an dieser Stelle die gleiche Permeabilität wie Luft auf, bildet also einen virtuellen Luftspalt, der die Primärspule in zwei Teilspulen aufteilt.

Infolge der Anordnung des Magneten außerhalb der von dem Kern umschlossenen Freifläche, ist das erfindungsgemäße Wegsensorsystem dazu geeignet, Verfahrwege eines in einem Gehäuse angeordneten Bauteils, das in dem Gehäuse mit einem Magneten bewegungsgekoppelt ist, mit einem außerhalb des Gehäuses angeordneten Sensor zu erfassen. Da der erfindungsgemäß verwendete Kern einen geschlossenen Magnetkreis bildet, hat er bezüglich seiner magnetischen Eigenschaften gegenüber den in den bekannten Wegsensorsystemen bislang verwendeten stabförmigen Kernen erhebliche Vorteile. Hierzu zählen vor allem eine größere Störunempfindlichkeit und eine geringere Störausstrahlung des Kerns. Während an stabförmigen Kernen aufgrund der Streuung an den freien Enden des Kerns hohe magnetische Verluste entstehen, die sich insbesondere bei der Anwesenheit von ferromagnetischen Bauteilen in der Nähe des Sensors durch Ableitung des magnetischen Flusses in diese Bauteile als Messfehler äußern, sind die Streuverluste bei dem erfindungsgemäß verwendeten Kern deutlich geringer. Der magnetische Fluss durch die Sekundärspulen ist bei gleicher Erregerleistung deutlich höher, da der Kern keine freien Kernenden aufweist, an denen eine Streuung und somit Verluste auftreten können. So weist der erfindungsgemäße Sensor einen höheren Wirkungsgrad auf. Gleichzeitig kann ein erheblich besseres lineares Verhalten über die Messstrecke bis in die äußeren Endbereiche der Messstrecke erzielt werden. Während Sensoren mit den bislang üblichen stabförmigen Kernen eine hohe Anfälligkeit gegenüber magnetischen Fremdfeldern aufweisen, ist diese Anfälligkeit aufgrund der Kernausgestaltung des erfindungsgemäßen Sensors erheblich verringert. In der Nähe des Sensors angeordnete ferromagnetische Bauteile haben insofern nur geringe Auswirkungen auf den Sensor. Schließlich weist der Sensor wegen des erfindungsgemäß verwendeten Kerns auch eine verbesserte elektromagnetische Verträglichkeit gegenüber anderen elektronischen Bauteilen oder Geräten auf, da die Emission magnetischer Störfelder auf diese Bauteile bzw. Geräte ebenfalls wegen des geschlossenen Magnetkreises des Kerns weitestgehend ausbleibt.

Vorteilhaft kann der Kern einen im Wesentlichen rechteckigen Rahmen bilden. Der Kern kann also zwei parallel zueinander ausgerichtete gerade Kernabschnitte aufweisen, die an ihren axialen Enden jeweils mittels eines ebenfalls geraden Kernabschnitts verbunden sind. Hierbei sind auf den parallel zueinander ausgerichteten Kernabschnitten lediglich die Primärspulen angeordnet und auf den an diesen Kernabschnitten quer, insbesondere orthogonal anschließenden Kernabschnitten die Sekundärspulen angeordnet. Hierdurch kann der Sensor des erfindungsgemäßen Wegsensorsystems in Richtung der Messtrecke eine deutliche kompaktere Baugröße aufweisen.

Bei einer Ausgestaltung des Kerns, bei der der Kern zwei zueinander parallel ausgerichtete lineare Kernabschnitte aufweist, die an ihren axialen Enden jeweils mittels eines bogenförmigen bzw. ringsegmentförmigen Kernabschnitts miteinander verbunden sind, sind die Primärspulen auf den linearen Kernabschnitten angeordnet, während die Sekundärspulen jeweils auf den ringsegmentförmigen Kernabschnitten angeordnet sind. Dies ist insbesondere dann vorteilhaft, wenn der Sensor im Bereich der Messstrecke, also im Bereich der beiden linearen Kernabschnitte quer zur Längsausdehnung dieser beiden Kernabschnitte besonders schmal ausgebildet sein soll. In diesem Fall kann es zur Anordnung der Sekundärspulen auf den ringsegmentförmigen Kernabschnitten ggf. erforderlich sein, dass diese Kernabschnitte quer zur Längsausdehnung des Sensors eine Erweiterung bilden. Dabei müssen diese Kernabschnitte nicht kreisförmig ausgebildet sein, sondern können auch in anderer Form gekrümmt oder abgewinkelt sein.

Bei dem erfindungsgemäßen magnetischen Wegsensorsystem sind die Primärspulen so verschaltet, dass beide Primärspulen einen im Kern umlaufenden Magnetfluss erzeugen, vorzugsweise sind die Primärspulen in Reihe geschaltet. Beide Primärspulen sind bevorzugt gleich lang, parallel zueinander angeordnet und weisen entlang der Messstrecke bevorzugt gleiche Anfangs- und Endpunkte auf, d.h. sie sind an zwei einander gegenüberliegenden

Kernabschnitten zu einer Längs- bzw. Mittelachse des Kerns symmetrisch angeordnet. Der Magnet kann auch so zu den beiden Primärspulen angeordnet sein, dass beide Primärspulen einen Teil der Messstrecke bilden. Der Vorteil dieser Ausgestaltung liegt darin, dass der durch die beiden Primärspulen fließende Strom einen im Kern umlaufenden Magnetfluss erzeugt, der gegenüber dem Magnetfluss bei Verwendung einer Primärspule erhöht ist. Vorteilhaft führt dies zu einer Erhöhung des Signalpegels des Ausgangssignals der Spulenanordnung.

Bei dem erfindungsgemäßen Sensoraufbau kann die Windungsanzahl der verwendeten Primär- und Sekundörspulen so gering sein, dass lediglich eine einlogige Wicklung dieser Spulen erforderlich ist. Dies ermöglicht es, Spulen zu verwenden, die nicht mittels Wickeltechnik hergestellt sind. So sieht eine vorteilhafte Weiterbildung der Erfindung vor, die Primärspule und/oder die Sekundärspule aus miteinander verbundenen planaren Leiterbahnen auszubilden. Bei dieser Ausbildung in Planartechnik ist der Kern zwischen planaren Leiterbahnen angeordnet, die seitlich des Kerns miteinander verbunden werden, um den Kern nach Art einer Spule vollständig zu umgeben. D.h., die planaren Leiterbahnen bilden Windungsabschnitte der Spule. Durch die elektrisch leitende Verbindung dieser Leiterbahnen bevorzugt seitlich des Kerns werden vollständige Windungen der Spule geschaffen. In diesem Zusammenhang ist es möglich, mit hoher Herstellungsgenauigkeit sowie mit hoher Herstellungsreproduzierbarkeit die Spulen nach Art einer Leiterplatte mit einem im Inneren angeordneten Kern auszubilden oder besonders vorteilhaft alle Sensorbestandteile wie z.B. den Kern, die Spulen und eine elektronische Auswerteeinrichtung mit den gängigen Verfahren der Platinenherstellung in ein und demselben Substrat unterzubringen oder darauf anzuordnen, was eine kostengünstige Massenfertigung des Sensors ermöglicht.

Eine kostengünstige Fertigung des Sensors kann auch dann erzielt werden, wenn, wie es weiter bevorzugt vorgesehen ist, der Kern eine Isolierummantelung aufweist. In diesem Fall kann beispielsweise mit den gängigen Verfahren der MID-Technologie auf den Kern zunächst eine Isolierummantelung aus Kunststoff aufgetragen werden, woraufhin dann die metallischen Leiterbahnen auf die Isolierummantelung aufgetragen werden und elektrisch leitende Verbindungen dieser Leiterbahnen geschaffen werden.

Weist der Kern eine Isolierummantelung auf, kann eine besonders kompakte Baugröße des Sensors erzielt werden, wenn vorteilhaft auf der Isolierummantelung eine Auswerteeinrichtung zu Ermittlung der Position des Magneten angeordnet wird. Hierbei ist die Auswerteeinrichtung bevorzugt neben dem Kern angeordnet.

Vorteilhaft können die Leiterbahnen mittels Via-Bohrungen miteinander verbunden sein. Dies ist insbesondere dann zweckmäßig, wenn Teile der Spulen auf zwei entgegengesetzten Oberflächen einer Isolierummantelung ausgebildet sind. In diesem Fall ist die Leiterplatte bzw. die Isolierummantelung durchkontaktiert, d.h., die Leiterplatte weist metallisierte Bohrungen auf, die von einer Oberfläche der Leiterplatte zu der davon abgewandten Oberfläche verlaufen und eine Leitungsverbindung zwischen den einzelnen Leiterbahnabschnitten schaffen. So wird es möglich, die Leiterbahnen, welche Windungsabschnitte einer Spule auf den beiden entgegengesetzten Oberflächen der Leiterplatte bilden, beispielsweise durch Metallisierung der Bohrungen oder sonstige metallische Leiter, welche in die Bohrungen eingebracht werden, elektrisch leitend zu vollständigen Windungen der Spule zu verbinden.

Wie bereits angemerkt worden ist, ist das erfindungsgemäße Wegsensorsystem auch zur berührungslosen Positionsbestimmung eines Bauteils durch eine Wand, z.B. durch ein Aluminiumgehäuse hindurch, geeignet. Insofern können der Magnet und der Sensor vorteilhaft an voneinander abgewandten Seiten einer Wand angeordnet sein. So ist es mit dem erfindungsgemäßen Wegsensorsystem möglich, den Verfahrweg eines in einem geschlossenen Gehäuse angeordneten Bauteils zu ermitteln, indem dieses Bauteil in dem Gehäuse mit dem Magneten bewegungsgekoppelt wird, wobei der Sensor außenseitig des Gehäuses angebracht wird.

Nachfolgend wird die Erfindung beispielhaft anhand der, in den beigefügten Zeichnungsfiguren dargestellten Ausführungsbeispiele näher erläutert. In diesen zeigt:
- Fig. 1: schematisch den Aufbau eines Weg- sensorsystems,
- Fig. 2: ein schematisches Schaltbild eines Sensors des Wegsen- sorsystems nach Fig. 1.
- Fig. 3: schematisch den Aufbau des erfindungsgemäßen Weg- sensorsystems in einem Ausführungsbeispiel,
- Fig. 4: ein schematisches Schaltbild eines Sensors, des Wegsen- sorsystems nach Fig. 3,
- Fig. 5: schematisch den Aufbau des erfindungsgemäßen Weg- sensorsystems in einem weiteren Ausführungsbeispiel,
- Fig. 6: schematisch einen Sensor des Wegsensorsystems nach Fig. 5 ohne eine Isolierummantelung des Kerns,
- Fig. 7: schematisch den Aufbau des erfindungsgemäßen Weg- sensorsystems in einem weiteren Ausführungsbeispiel,
- Fig. 8: schematisch einen Sensor des Wegsensorsystems nach Fig. 7 ohne eine Isolierummantelung des Kerns,
- Fig. 9: schematisch den Aufbau eines Weg- sensorsystems,
- Fig. 10: schematisch einen Sensor des Wegsensorsystems nach Fig. 9 ohne eine Isolierummantelung des Kerns und
- Fig. 11: schematisch einen Sensor mit einer darauf angeordneten Auswerteeinrichtung.

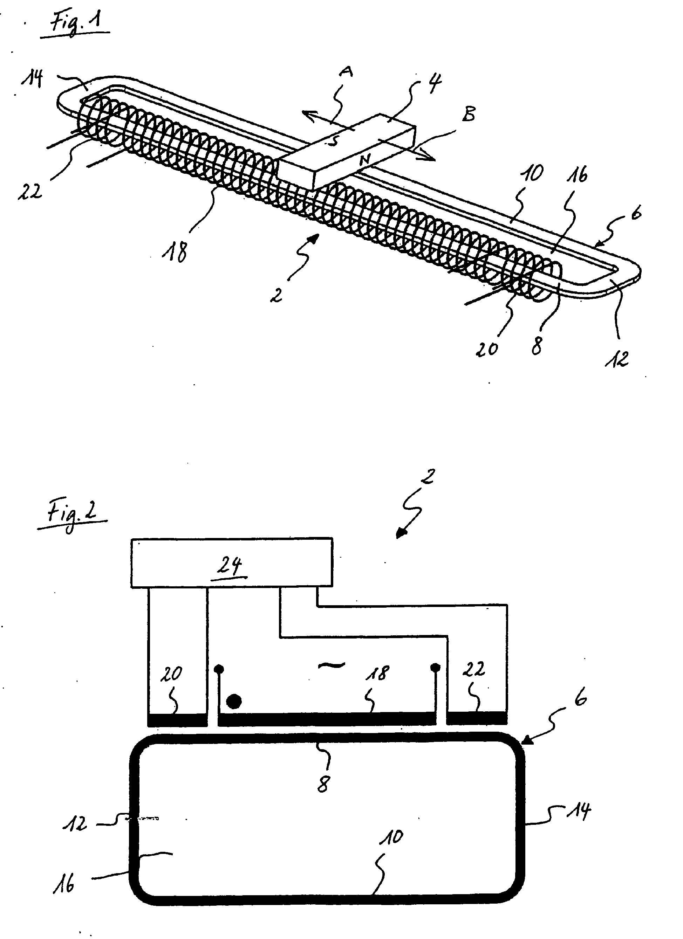

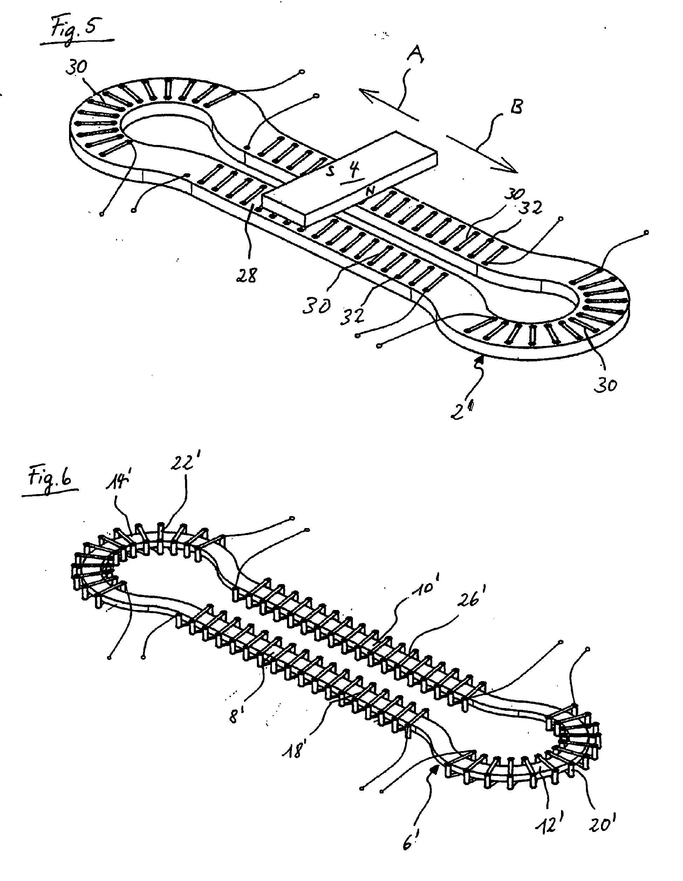

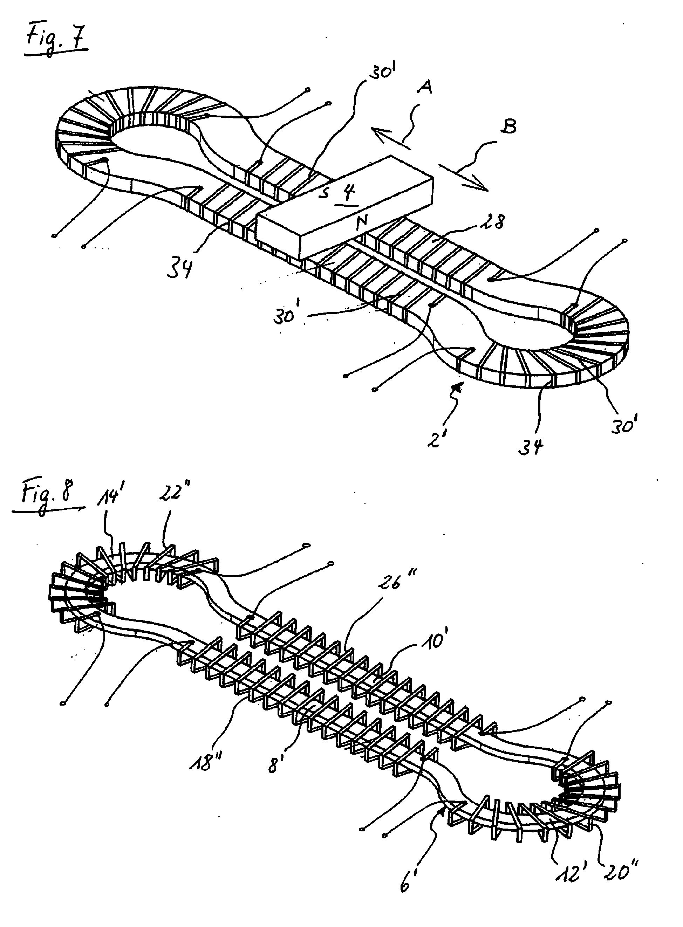

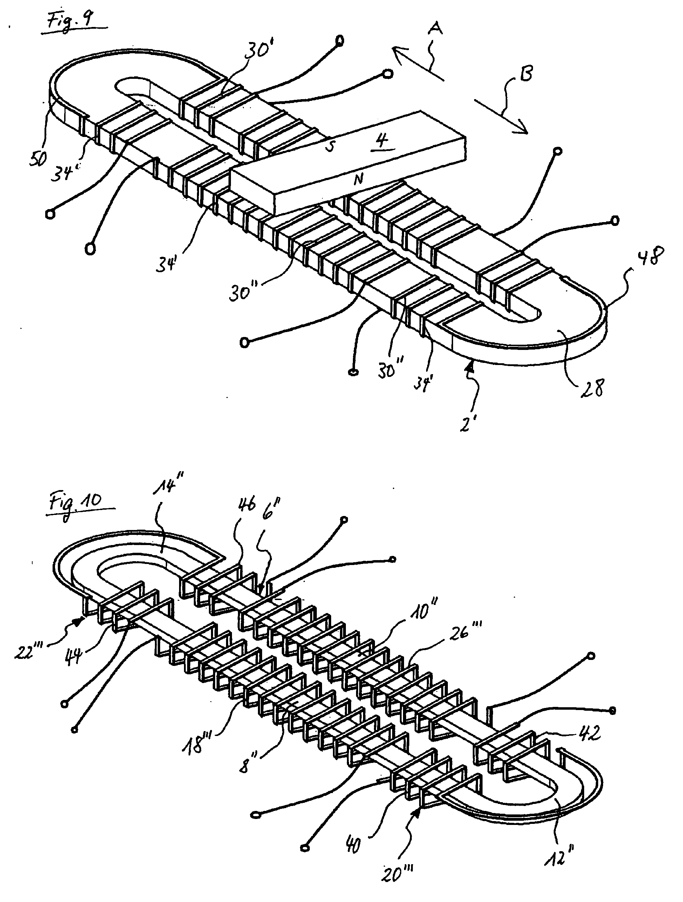

Fig. 1 zeigt ein Wegsensorsystem mit einem Sensor 2 und einem Magneten 4, bei dem es sich um einen Permanentmagneten handelt. Der Sensor 2 weist einen Kern 6 auf. Dieser Kern 6 hat die Form eines rechteckigen Rahmens mit zwei parallel zueinander ausgerichteten geraden Kernabschnitten 8 und 10, die an ihren axialen Enden mittels gerader Kernabschnitte 12 und 14 verbunden sind, die deutlich kürzer als die Kernabschnitte 8 und 10 sind und sich normal zu den Kernabschnitten 8 und 10 erstrecken. Je nach Messstrecke können die Kernabschnitte 8 und 10 auch kürzer ausgebildet sein, so dass z.B. ein eher quadratischer Kern gebildet wird. Dementsprechend umschließt der Kern 6 eine Freifläche 16. Der Kern 6, wie auch die in den Figuren 6 und 8 dargestellten Kerne 6' sowie der Kern 6" in Fig. 10, können aus einem amorphen, nanokristallinen und/oder kristallinen ferromagnetischen Material bestehen.

Um den Kernabschnitt 8 ist eine Primärspule 18 angeordnet. Außenseitig eines ersten Endes der Primärspule 18 ist eine Sekundärspule 20 und außenseitig eines zweiten Endes der Primärspule 18 ist eine zweite Sekundärspule 22 angeordnet. Die Spulen können herkömmlich gewickelt oder, wie unten beschrieben, in Planartechnik ausgebildet sein. Insbesondere dann, wenn die Spulen in herkömmlicher Weise auf den Kern 6 aufgewickelt werden, ist der Kern 6 bevorzugt zweiteilig ausgebildet. In diesem Fall besteht der Kern 6 aus einem ersten Teil, der von einem Kernabschnitt gebildet wird, und einem zweiten Teil, der von den übrigen Kernabschnitten gebildet wird. Beispielsweise können in den Kernabschnitten 12 und 14 Trennfugen vorgesehen sein, welche den Kern 6 in zwei U-förmige Kernteile teilen. Diese Ausgestaltung des Kerns 6 erleichtert das Aufwickeln der Primärspule 18 und der Sekundärspulen 20 und 22 auf dem Kern 6 oder ermöglicht es, die Primärspule 18 sowie die Sekundärspulen 20 und 22 vorgewickelt auf den Kern 6 aufzustecken. Anschließend werden die beiden Kernteile z.B. durch Löten oder Schweißen zu dem vollständigen Kern 6 verbunden. Wie aus dem Schaltbild der Fig. 2 hervorgeht, ist die Primärspule 18 an einer Wechselspannungsquelle angeschlossen, während die Sekundärspulen 20 und 22 jeweils mit einer Auswerteeinrichtung 24 signalverbunden sind.

Beabstandet von dem Kern 6 und beabstandet von der um den Kern 6 gewickelten Primärspule 18 ist der Magnet 4 parallel zu dem Kernabschnitt 8 in eine Richtung A und eine hierzu entgegengesetzte Richtung B bewegbar angeordnet. Hierbei sind die beiden Pole des Magneten 4 in Richtung der Längsausdehnung des Kernabschnitts 8 ausgerichtet. Der Magnet 4 ist mit einem nicht dargestellten Bauteil bewegungsgekoppelt, dessen Bewegungsweg bzw. Position ermittelt werden soll. Hierzu bildet die Primärspule 18 eine Messstrecke, wie nachfolgend ausführlich erläutert wird. Das mit dem Magneten 4 bewegungsgekoppelte Bauteil kann in einem geschlossenen Gehäuse angeordnet sein, wobei der Sensor 2 außerhalb dieses Gehäuses angeordnet ist. D.h. eine Wand liegt zwischen dem Magnet 4 und dem Sensor 2.

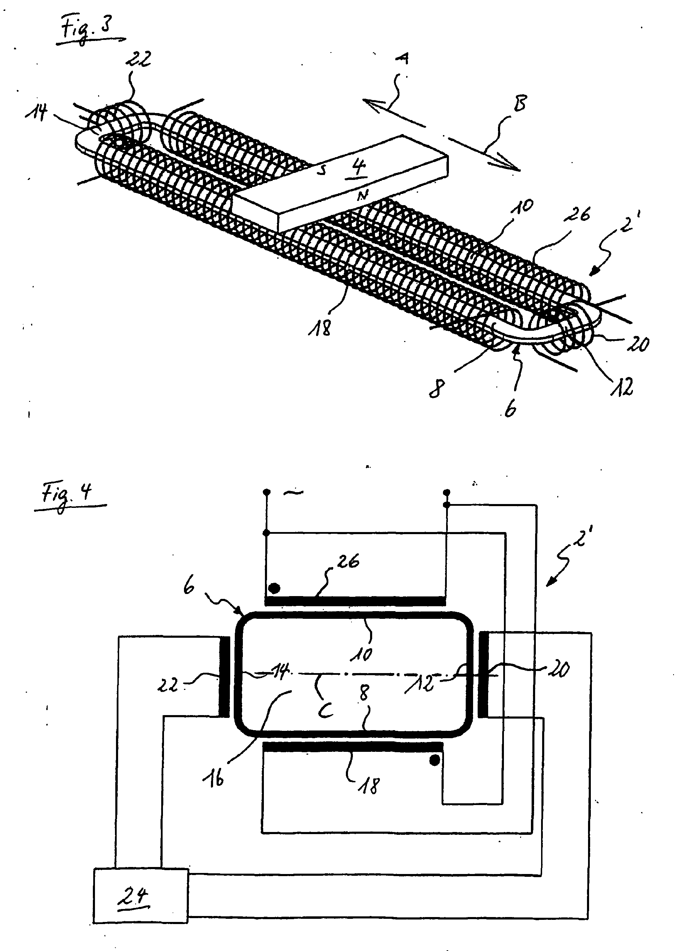

Das in den Fig. 3 und 4 dargestellte Wegsensorsystem unterscheidet sich von dem in den Fig. 1 und 2 dargestellten Wegsensorsystem dahingehend, dass die Sekundärspulen 20 und 22 nicht auf dem Kernabschnitt 8 sondern auf den daran rechtwinklig abgewinkelt anschließenden Kernabschnitten 12 und 14 des Kerns 6 angeordnet sind. D.h., auf dem Kernabschnitt 8 ist lediglich die Primärspule 18 angeordnet, was es gestattet, die Kernabschnitte 8 und 10 gegenüber dem in den Fig. 1 und 2 dargestellten Ausführungsbeispiel deutlich kürzer zu dimensionieren. Um den in dem Kern 6 umlaufenden Magnetfluss zu erhöhen, ist eine weitere Primärspule 26 vorgesehen, die der Primärspule 18 entspricht und der Primärspule 18 symmetrisch zu einer Mittelachse C gegenüberliegend auf dem Kernabschnitt 10 angeordnet ist. Beabstandet von dem Kern 6 ist der Magnet 4 parallel zu den Kernabschnitten 8 und 10 über den Primärspulen 18 und 26 bewegbar. Hierbei erzeugt der Magnet 4 sowohl in dem Kernabschnitt 8 als auch in dem Kernabschnitt 10 eine Sättigung, wodurch die Primärspulen 18 und 26 jeweils in zwei virtuelle Teilspulen aufgeteilt werden. Die Primärspulen 18 und 26 sind so verschaltet, dass sie in dem Kern 6 einen umlaufenden Magnetfluss erzeugen.

Bei den in den Fig. 5 bis 8 dargestellten beiden Ausführungsbeispielen des erfindungsgemäßen Wegsensorsystems weist der Kern 6' (Fig. 6 und 8) zwei voneinander beabstandete und dabei zueinander parallel ausgerichtete gerade Kernabschnitte 8' und 10' auf. An ihren axialen Enden sind die Kernabschnitte 8' und 10' mittels Kernabschnitten 12' und 14' verbunden. Die Kernabschnitte 12' und 14' sind ringsegmentförmig ausgebildet, wobei der Außendurchmesser der Kernabschnitte 12' und 14' so groß gewählt ist, dass sich der Kern 6' im Bereich der Kernabschnitte 8' und 10' flaschenhalsartig verjüngt. Sowohl in dem in den Fig. 5 und 6 dargestellten Ausführungsbeispiel des erfindungsgemäßen Wegsensorsystems als auch in dem in den Fig. 7 und 8 dargestellten Ausführungsbeispiel des erfindungsgemäßen Wegsensorsystems ist der Kern 6' vollständig von einer nicht leitenden Isolierummantelung 28 umgeben (Fig. 5 und 7). Diese Isolierummantelung 28 kann z.B. mittels Spritzguss oder eines anderen geeigneten Verfahrens der MID-Technologie oder Leiterplattentechnik auf den Kern 6' aufgetragen werden (Fig. 5 und 7).

Bei dem in den Fig. 5 und 6 dargestellten Ausführungsbeispiel ist der Kern 6' in Leiterplattentechnik vollständig zwischen zumindest zwei flachen Substratschichten angeordnet, die so eine Isolierummantelung 28 des Kerns 6 bilden. Bei dem in Fig. 5 dargestellten Ausführungsbeispiel ist die Außenkontur der Substrathälften an die Außenkontur des Kerns angepasst. Es können allerdings auch geschlossen rechteckige Substrathälften verwendet werden, die zusammengefügt eine rechteckige Platine bilden. Anstatt die Isolierummantelung 28 in Leiterplattentechnik aus mehreren Lagen zusammenzusetzen, kann der Kern 6' auch mit Kunststoff im Spritzguss ummantelt werden, um die Isolierummantelung 28 auszubilden.

Auf zwei einander entgegengesetzten Oberflächen der Isolierummantelung 28 sind jeweils in dem Bereich, in dem zukünftig die Kernabschnitte 8', 10' 12' und 14' angeordnet sind, parallel zueinander angeordnete elektrisch leitende Leiterbahnen bzw. Leiterbahnabschnitte 30 aufgetragen. Die Leiterbahnabschnitte 30 bilden jeweils Abschnitte einer Spulenwindung. In dem Bereich, in dem später die geraden Kernabschnitte 8' und 10' angeordnet sind, sind die Leiterbahnabschnitte 30 im Wesentlichen quer zur Längsausdehnung dieser Kernabschnitte 8' und 10' ausgerichtet, während sie in dem Bereich, in dem später die Kernabschnitte 12' und 14' angeordnet sind, im Wesentlichen radial ausgerichtet sind. Die Leiterbahnabschnitte 30 erstrecken sich nicht über die gesamte Breite der Oberflächen der Isolierummantelung 28 sondern enden jeweils beabstandet von deren Längskanten. An allen Enden der Leiterbahnabschnitte 30 erstrecken sich Bohrungen 32 senkrecht zu den Oberflächen der Isolierummantelung 28 außenseitig der künftigen Anordnung des Kerns 6' durch die Substrathälften. Die Bohrungen 32 sind als elektrisch leitende Via-Bohrungen 32 ausgebildet. Auf diese Weise bilden die Leiterbahnabschnitte 30 zusammen mit den Bohrungen 32 vollständige Windungen und somit im Bereich des Kernabschnitts 8' eine Primärspule 18', im Bereich des Kernabschnitts 10' eine Primärspule 26', im Bereich des Kernabschnitts 12' eine Sekundärspule 20' und im Bereich des Kernabschnitts 14' eine Sekundärspule 22' (Fig. 6). Anstelle der Via-Bohrungen 32 können auch andere geeignete elektrisch leitende Verbindungen zum Einsatz kommen, um die Leiterbahnabschnitte 30 zu Windungen einer Spule miteinander zu verbinden. Bei dieser Ausführungsform muss die Isolierummantelung 28 nicht der Form des Kerns 6' entsprechen, vielmehr kann der Kern 6' auch in eine z.B. rechteckige Leiterplatte als Isolierummantelung 28 eingebettet sein.

Auch bei dem in den Fig. 7 und 8 dargestellten Ausführungsbeispiel sind auf zwei entgegengesetzten Oberflächen des hier mittels Spritzguss ummantelten Kerns 6' jeweils im Bereich der Kernabschnitte 8', 10' 12' und 14' parallel zueinander angeordnete elektrisch leitende Leiterbahnabschnitte 30' auf der Isolierummantelung 28 aufgetragen. Die Leiterbahnabschnitte 30' unterscheiden sich von den in Fig. 5 dargestellten Leiterbahnabschnitten 30 dahingehend, dass sie sich über die gesamte Breite der Oberflächen der Isolierummantelung 28 erstrecken. Die auf voneinander abgewandten Oberflächen der Isolierummantelung 28 angeordneten Leiterbahnabschnitte 30' werden mittels Leiterbahnabschnitten 34 verbunden, die auf der Außenseite der zu den Oberflächen senkrecht ausgerichteten Querseiten der Isolierummantelung aufgetragen sind. Die Leiterbahnabschnitte 30 bilden zusammen mit den Leiterbahnabschnitten 34 im Bereich des Kernabschnitts 8' eine Primärspule 18", im Bereich des Kernabschnitts 10' eine Primärspule 26", im Bereich des Kernabschnitts 12' eine Sekundärspule 20" und im Bereich des Kernabschnitts 14' eine Sekundärspule 22" (Fig. 8). Auch bei diesem Ausführungsbeispiel könnte die Isolierummantelung 28 anstatt im Spritzguss als Leiterplatte aus mehreren Schichten zusammengesetzt werden.

Das in den Fig. 9 und 10 dargestellte Ausführungsbeispiel unterscheidet sich von dem in den Fig. 6 und 8 dargestellten Ausführungsbeispiel hinsichtlich der Form des Kerns 6" sowie der Art und Anordnung der Sekundärspulen 20" und 22". Der Kern 6" weist zwei parallel zueinander ausgerichtete gerade Kernabschnitte 8" und 10" auf, die an ihren axialen Enden mittels halbkreisförmig gebogener Kernabschnitte 12" und 14" verbunden sind. Im Gegensatz zu den in den Fig. 5 und 7 dargestellten Sensoren 2 vergrößern sich also bei dem in Fig. 9 dargestellten Sensor 2' im Bereich der Kernabschnitte 12" und 14" die Abmessungen nicht quer zur Längsausdehnung des Sensors 2'. Wie bei dem Ausführungsbeispiel aus Fig. 7 und 8, ist auch der Kern 6" des Sensors 2' mittels Spritzguss mit einer Isolierummantelung 28 umgeben. Um den Kernabschnitt 8" ist eine Primärspule 18"' und um den Kernabschnitt 10" ist eine Primärspule 26"' angeordnet. Darüber hinaus sind zwei Sekundärspulen 20"' und 22"' vorgesehen, die jeweils zweiteilig ausgebildet sind. Die Sekundärspule 20"' weist einen Spulenabschnitt 40 auf, der um den Kernabschnitt 8" außenseitig der Primärspule 18"' angeordnet ist. Dieser Spulenabschnitt 40 ist mit einem zweiten Spulenabschnitt 42 leitungsverbunden, der um den Kernabschnitt 10" außenseitig der Primärspule 26"' angeordnet ist. In korrespondierender Weise weist die Sekundärspule 22"' einen Spulenabschnitt 44 auf, der um den Kernabschnitt 8" außenseitig der Primärspule 18"' angeordnet ist, wobei dieser Spulenabschnitt 44 mit einem zweiten Spulenabschnitt 46 leitungsverbunden ist, der um den Kernabschnitt 10" außenseitig der Primärspule 26"' angeordnet ist. Die Primärspulen 18"' und 26"' wie auch die Sekundärspulen 20"' und 22"' werden von Leiterbahnabschnitten 30", die auf zwei entgegen gesetzten Oberflächen der Isolierummantelung 28 aufgetragen sind, und von Leiterbahnabschnitten 34', die auf der Außenseite der zu den Oberflächen senkrecht ausgerichteten Querseiten der Isolierummantelung 28 aufgetragen sind, gebildet. Darüber hinaus ist zur Bildung der Sekundärspule 20"' ein Leiterbahnabschnitt 48 vorgesehen, der die Spulenabschnitte 40 und 42 verbindet, während die Spulenabschnitte 44 und 46 der Sekundärspule 22"' mittels eines Leiterbohnabschnitts 50 verbunden sind.

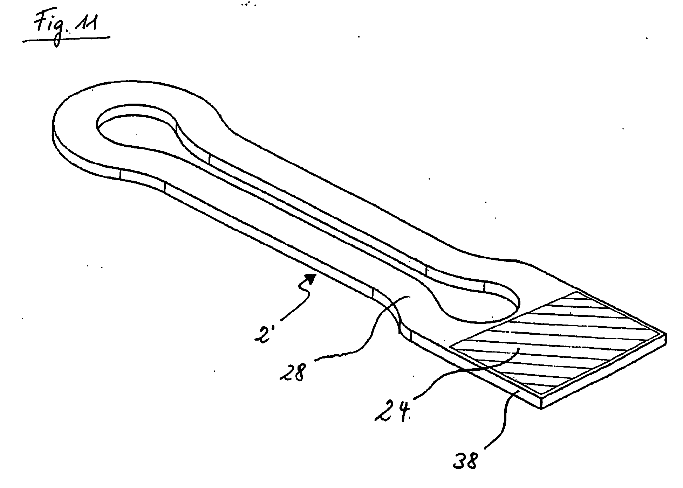

Fig. 11 zeigt einen mit einer Isolierummantelung 28 versehenen Kern 6' eines Sensor 2' des Wegsensorsystems, wobei aus Gründen der Übersichtlichkeit auf eine Darstellung der Leiterbahnen auf der Isolierummantelung 28 verzichtet worden ist. Diese können wie vorangehend anhand der Fig. 5 bis 8 beschrieben ausgebildet sein. Im Bereich des Kernabschnitts 12' bildet die Isolierummantelung eine sich in Längsausdehnung des Sensors 2' erstreckende Erweiterung 38, auf deren Oberfläche bzw. Flachseite eine elektronische Auswerteeinrichtung 24 des Sensors 2' angeordnet ist.

Die Funktionsweise des in den Figuren 1 und 2 dargestellten Wegsensorsystems, die auch der Funktionsweise der übrigen in den Zeichnungsfiguren dargestellten Ausführungsbeispiele entspricht, ist wie folgt:
An der Primärspule 18 liegt Wechselspannung an. In Folge dieser Wechselspannung wird in den beiden Sekundärspulen 20 und 22 jeweils eine Spannung induziert. Bewegt sich das Bauteil, dessen Wegänderung und/oder Position mit Hilfe des Wegsensorsystems ermittelt werden soll, bewegt sich auch der mit diesem Bauteil bewegungsgekoppelte Magnet 4 entlang der Primärspule 18. In Folge des Magnetfeldes des Magneten 4 wird der Kern 6 im Bereich des Kernabschnitts 8 und des Kernabschnitts 10 auf Höhe des Magneten 4 in Sättigung gebracht, wodurch in dem Kernabschnitt 8 und dem Kernabschnitt 10 ein virtueller Luftspalt erzeugt wird. Hierdurch wird das Feld der Primärspule 18 differenziell in zwei Einzelfelder aufgeteilt, wobei die Einzelfelder in den Sekundärspulen 20 und 22 zur Position des Magneten 4 proportionale Induktionsspannungen erzeugen. Diese Induktionsspannungen werden in der Auswerteeinrichtung 24, bei der es sich beispielsweise um einen Mikrocontroller handeln kann, erfasst und dort z.B. mittels einer Subtraktionsschaltung oder einer Verhältnisbildung zu einem Wert für die Position des Bauteils weiterverarbeitet.

### Bezugszeichenliste

- 2, 2': - Sensor
- 4: - Magnet
- 6, 6',6": - Kern
- 8, 8', 8": - Kernabschnitt
- 10, 10', 10": - Kernabschnitt
- 12, 12', 12": - Kernabschnitt
- 14, 14', 14": - Kernabschnitt
- 16: - Freifläche
- 18, 18', 18", 18"': - Primärspule
- 20, 20', 20",20"': - Sekundärspule
- 22, 22', 22",22"': - Sekundärspule
- 24: - Auswerteeinrichtung
- 26, 26', 26", 26"': - Primärspule
- 28: - Isolierummantelung
- 30, 30', 30": - Leiterbahnabschnitt
- 32: - Bohrung, Via-Bohrung
- 34, 34': - Leiterbahnabschnitt
- 38: - Erweiterung
- 40: - Spulenabschnitt
- 42: - Spulenabschnitt
- 44: - Spulenabschnitt
- 46: - Spulenabschnitt
- 48: - Leiterbahnabschnitt
- 50: - Leiterbahnabschnitt

- A: - Richtung
- B: - Richtung
- C: - Mittelachse

## Patentansprüche

1. Magnetisches Wegsensorsystem mit zumindest einem Magneten (4) und zumindest einem Sensor (2, 2'), welche relativ zueinander beweglich angeordnet sind, wobei der Sensor (2, 2') einen eine innere Freifläche (16) umschließenden weichmagnetischen Kern (6, 6', 6") aufweist, **dadurch gekennzeichnet, dass** auf dem Kern (6, 6', 6") zwei Primärspulen (18, 18', 18", 18"', 26, 26', 26", 26"') und zwei Sekundärspule (20, 20', 20", 20"', 22, 22', 22", 22"') angeordnet sind, wobei der Magnet (4) außerhalb der von dem Kern (6, 6', 6") aufgespannten Fläche angeordnet ist und zur Erzeugung einer magnetischen Sättigung in dem Kern (6, 6', 6") ausgebildet ist und der Kern (6, 6', 6") zwei zueinander parallel ausgerichtete lineare Kernabschnitte (8, 8', 8", 10, 10', 10") aufweist, die an ihren axialen Enden jeweils mit einem sich quer oder bogenförmig anschließenden Kernabschnitt (12, 12', 12", 14, 14', 14") verbunden sind und wobei auf den beiden sich quer oder bogenförmig anschließenden Kernabschnitten (12, 12', 12", 14, 14', 14") jeweils eine Sekundärspule (20, 20', 20", 20"', 22, 22', 22", 22"') angeordnet ist.

2. Magnetisches Wegsensorsystem nach Anspruch 1, bei dem der Kern (6) einen im Wesentlichen rechteckigen Rahmen bildet.

3. Magnetisches Wegsensorsystem nach einem der vorangehenden Ansprüche, bei dem die erste (18, 18', 18", 18"') und die zweite Primärspule (26, 26', 26", 26"') auf zwei einander gegenüberliegend angeordneten Kernabschnitten (8, 8', 8", 10, 10', 10") angeordnet sind.

4. Magnetisches Wegsensorsystem nach einem der vorangehenden Ansprüche, bei dem die Primärspulen (18', 18", 18"', 26', 26", 26"') und/oder die Sekundärspulen (20', 22", 22"')aus miteinander verbundenen Leiterbahnen (30, 30', 30") ausgebildet sind.

5. Magnetisches Wegsensorsystem nach Anspruch 4, bei dem die Leiterbahnen (30) mittels Via-Bohrungen miteinander verbunden sind.

6. Magnetisches Wegsensorsystem nach Anspruch 4, bei dem die Leiterbahnen (30', 30") mittels seitlicher Verbindungen (34, 34') miteinander verbunden sind.

7. Magnetisches Wegsensorsystem nach einem der Ansprüche 4 bis 6, bei dem der Kern (6, 6', 6") eine Isolierummantelung (28) aufweist.

8. Magnetisches Wegsensorsystem nach Anspruch 7, bei dem auf der Isolierummantelung (28) eine Auswerteeinrichtung (24) zur Ermittlung der Position des Magneten (4) angeordnet ist.

9. Magnetisches Wegsensorsystem nach einem der vorangehenden Ansprüche, bei dem der Magnet (4) und der Sensor (2, 2') an voneinander abgewandten Seiten einer Wand angeordnet sind.

## Claims

1. A magnetic displacement sensor system with at least one magnet (4) and at least one sensor (2, 2') which are movably arranged relative to one another, wherein the sensor (2, 2') comprises a soft-magnetic core (6, 6', 6") which encloses an inner free area (16), **characterised in that** two primary coils (18, 18', 18", 18"', 26, 26', 26", 26"') and two secondary coils (20, 20', 20", 20"', 22, 22' 22", 22"') are arranged on the core (6, 6', 6"), wherein the magnet (4) is arranged outside the area spanned by the core (6, 6', 6") and is designed for producing a magnetic saturation in the core (6, 6', 6"), and the core (6, 6', 6") comprises two linear core sections (8, 8', 8", 10, 10', 10") which are aligned parallel to one another and which at their axial ends are each connected to a core section (12, 12' 12", 14, 14', 14") connecting in a transverse or arched manner, and wherein in each case a secondary coil (20, 20', 20", 20"', 22, 22' 22", 22"') is arranged on the two core sections (12, 12' 12", 14, 14', 14") connecting in a transverse or arched manner.

2. A magnetic displacement sensor system according to claim 1, with which the core (6) forms an essentially rectangular frame.

3. A magnetic displacement sensor system according to one of the preceding claims, with which the first (18, 18', 18", 18"') and the second primary coil (26, 26', 26", 26"') are arranged on two core sections (8, 8', 8", 10, 10', 10") which are arranged lying opposite one another.

4. A magnetic displacement sensor system according to one of the preceding claims, with which the primary coils (18', 18", 18"', 26', 26", 26"') and/or the secondary coils (22', 22", 22"') are formed from strip conductors (30, 30', 30") which are connected to one another.

5. A magnetic path sensor system according to claim 4, with which the strip conductors (30) are connected to one another by way of Via-holes.

6. A magnetic displacement sensor system according to claim 4, with which the strip conductors (30', 30") are connected to one another by way of lateral connections (34, 34').

7. A magnetic displacement sensor system according to one of the claims 4 to 6, with which the core (6, 6', 6") comprises an insulation casing (28).

8. A magnetic displacement sensor system according to claim 7, with which an evaluation device (24) for determining the position of the magnet (4) is arranged on the insulation casing (28).

9. A magnetic displacement sensor system according to one of the preceding claims, with which the magnet (4) and the sensor (2, 2') are arranged on sides of a wall which are away from one another.

## Revendications

1. Système de capteur de déplacement magnétique comprenant au moins un aimant (4) et au moins un capteur (2, 2') disposés de manière à pouvoir se déplacer l'un par rapport à l'autre, dans lequel le capteur (2, 2') présente un noyau magnétique doux (6, 6', 6") entourant une surface intérieure libre (16), **caractérisé en ce que** deux bobines primaires (18, 18', 18", 18"', 26, 26', 26", 26"') et deux bobines secondaires (20, 20', 20", 20"', 22, 22', 22", 22"') sont disposées sur le noyau (6, 6', 6"), l'aimant (4) étant disposé à l'extérieur de la surface définie par le noyau (6, 6', 6") et étant conçu pour produire une saturation magnétique dans le noyau (6, 6', 6"), et le noyau (6, 6', 6") présentant deux parties de noyau linéaires (8, 8', 8", 10, 10', 10") parallèles entre elles, qui sont reliées, à leurs extrémités axiales, respectivement à une partie de noyau (12, 12', 12", 14, 14', 14") s'y raccordant transversalement ou de manière arquée, et une bobine secondaire (20, 20', 20", 20"', 22, 22', 22", 22"') étant disposée sur chacune des deux parties de noyau (12, 12', 12", 14, 14', 14") se raccordant transversalement ou de manière arquée.

2. Système de capteur de déplacement magnétique selon la revendication 1, dans lequel le noyau (6) forme un cadre sensiblement rectangulaire.

3. Système de capteur de déplacement magnétique selon l'une des revendications précédentes, dans lequel les première (18, 18', 18", 18"') et deuxième (26, 26', 26", 26"') bobines primaires sont disposées sur deux parties de noyau (8, 8', 8", 10, 10', 10") situées en regard l'une de l'autre.

4. Système de capteur de déplacement magnétique selon l'une des revendications précédentes, dans lequel les bobines primaires (18', 18", 18"', 26', 26", 26"') et/ou les bobines secondaires (20', 22", 22"') sont constituées de pistes conductrices (30, 30', 30") reliées entre elles.

5. Système de capteur de déplacement magnétique selon la revendication 4, dans lequel les pistes conductrices (30) sont reliées entre elles au moyen de vias d'interconnexion.

6. Système de capteur de déplacement magnétique selon la revendication 4, dans lequel les pistes conductrices (30', 30") sont reliées entre elles au moyen de jonctions latérales (34, 34').

7. Système de capteur de déplacement magnétique selon l'une des revendications 4 à 6, dans lequel le noyau (6, 6', 6") présente une gaine isolante (28).

8. Système de capteur de déplacement magnétique selon la revendication 7, dans lequel un dispositif d'évaluation (24) destiné à déterminer la position de l'aimant (4) est disposé sur la gaine isolante (28).

9. Système de capteur de déplacement magnétique selon l'une des revendications précédentes, dans lequel l'aimant (4) et le capteur (2, 2') sont disposés sur des faces opposées d'une paroi.
